# EUROPEAN PATENT SPECIFICATION

(11) **EP 4 044 746 B1**
(45) Date of publication and mention of the grant of the patent: **15.07.2026**
(21) Application number: 19950788.0
(22) Date of filing: 31.10.2019
(51) Int. Cl.: H04L 1/1607, H04L 1/1822, H04L 1/1829, H04L 1/1867, H04L 5/00, H04L 27/00, H04W 74/0808

(54) **HYBRID AUTOMATIC REPEAT REQUEST FEEDBACK METHOD AND APPARATUS**
HYBRIDES AUTOMATISCHES WIEDERHOLUNGSANFORDERUNGSRÜCKKOPPLUNGSVERFAHREN UND GERÄT
PROCÉDÉ ET APPAREIL DE RENVOI DE DEMANDE DE RÉPÉTITION AUTOMATIQUE HYBRIDE

(43) Date of publication of application: 17.08.2022
(73) Proprietor: Huawei Technologies Co., Ltd., Shenzhen, Guangdong 518129 (CN)
(72) Inventor: JIA, Qiong, Shenzhen, Guangdong 518129 (CN); ZHANG, Jiayin, Shenzhen, Guangdong 518129 (CN); WU, Ji, Shenzhen, Guangdong 518129 (CN)
(74) Representative: Pfenning, Meinig & Partner mbB
(86) International application number: PCT/CN2019/114875
(87) International publication number: WO 2021/081948

(56) References cited:
- CN-A- 105 474 567
- CN-A- 107 332 646
- CN-A- 107 567 720
- US-A1- 2016 142 185
- US-A1- 2018 176 955
- US-A1- 2019 159 256
- HUAWEI ET AL: "HARQ related identifier assignment for Option2 groupcast mechanism", vol. RAN WG2, no. Prague, Czech Republic; 20190826 - 20190830, 16 August 2019 (2019-08-16), XP051768830, Retrieved from the Internet <URL:http://www.3gpp.org/ftp/tsg_ran/WG2_RL2/TSGR2_107/Docs/R2-1911068.zip> [retrieved on 20190816]

## Description

### TECHNICAL FIELD

This application relates to the field of communication technologies, and in particular, to a hybrid automatic repeat request (hybrid automatic repeat request, HARQ) feedback method and apparatus, a computer-readable storage medium, and a computer program product.

### BACKGROUND

Long term evolution (long term evolution, LTE) starts to support device-to-device (device-to-device, D2D) communication or sidelink communication (sidelink communication) in a cellular network since GPP Release 12. A D2D communication technology refers to a communication mode in which two peer-to-peer user nodes directly communicate with each other. Based on frequency bands in which D2D technologies are operated, the D2D technologies may be classified into a D2D technology that is operated in a licensed frequency band and a D2D technology that is operated in an unlicensed frequency band.

A communication system deployed in an unlicensed spectrum usually uses/shares an unlicensed resource in a contention manner. Usually, before sending a signal, a station first listens to whether the unlicensed spectrum is idle, for example, determining a busy/idle state of the unlicensed spectrum based on a magnitude of a receive power in the unlicensed spectrum. If the receive power is less than a particular threshold, it is considered that the unlicensed spectrum is in the idle state, and the signal can be sent in the unlicensed spectrum. If the receive power is not less than a particular threshold, the signal is not sent. This listen before talk mechanism is referred to as listen before talk (listen before talk, LBT).

In the licensed frequency band, there is a fixed time relationship between a physical sidelink shared channel (physical sidelink shared channel, PSSCH) and a physical sidelink feedback channel (physical SL feedback channel, PSFCH) for sending a HARQ feedback corresponding to the physical sidelink shared channel, so that a terminal device provides the HARQ feedback for the PSSCH on the PSFCH. However, in the unlicensed frequency band, the terminal device needs to perform LBT on the PSFCH before providing the HARQ feedback for the PSSCH on the PSFCH. Due to uncertainty of LBT, the terminal device may not provide a HARQ feedback in time, affecting subsequent transmission.

US 2018/176955 A1 discloses a method for network-assisted distributed UE cooperation in unlicensed spectrum. In the method, the UE operates in a cooperation mode, in which the UE acts a cooperating UE (CUE) in a cooperating group of UEs. In the cooperation mode, the UE receives a group-specific common-parameters configuration (CPC) message from a transmit point (TP) over a first spectrum band, the group-specific CPC message comprising information to configure cooperating UEs in the group for synchronous clear channel assessment (CCA) and aligned sidelink transmission starting times in a second spectrum band, and performs a synchronous CCA in the second spectrum band in accordance with a common contention window generated based on the information in the group-specific CPC message.

US 2016/142185 A1 discloses a method of wireless communication. The method includes receiving one or more transmissions from one or more of a plurality of apparatuses, generating an acknowledgement message comprising at least a group identifier associated with at least the plurality of apparatuses and acknowledgement information based on the received one or more transmissions, and transmitting the acknowledgement message to the plurality of apparatuses.

HUAWEI ET AL: "HARQ related identifier assignment for Option2 groupcast mechanism", 3GPP DRAFT R2-1911068 of August 16, 2019 discloses that each receiver UE has a unique PSFCH resource which is calculated based on an identifier which is defined to distinguish each RX UE in a group for HARQ feedback.

### SUMMARY

The invention is set out in the appended set of claims. Embodiments of this application provide a HARQ feedback method and apparatus, a computer-readable storage medium, and a computer program product, to resolve a current-technology problem that subsequent transmission is affected because a terminal device cannot provide a HARQ feedback in time due to uncertainty of LBT.

According to a first aspect, an embodiment of this application provides a HARQ feedback method. The method includes: A first terminal device performs LBT; and after the LBT succeeds, the first terminal device sends HARQ information of a plurality of second terminal devices on a channel resource on which the LBT succeeds. In this embodiment of this application, the first terminal device includes the HARQ information of the plurality of second terminal devices on one PSFCH. For different second terminal devices, the LBT may not need to be performed for a plurality of times, thereby reducing LBT overheads, and overcoming a problem that HARQ information corresponding to some second terminal devices cannot be sent in time due to an LBT failure.

Any second terminal device has a plurality of HARQ processes, and HARQ information of the second terminal device includes feedback information corresponding to the plurality of HARQ processes. In the foregoing design, the feedback information of the plurality of HARQ processes is sent, so that the second terminal device may resend data based on a granularity of HARQ process, thereby improving resource utilization.

The first terminal device sends an identifier of the first terminal device to the plurality of second terminal devices. According to the foregoing design, the second terminal device may determine an information source, so that accuracy of resending data by the second terminal device can be improved.

That the first terminal device sends HARQ information of a plurality of second terminal devices on a channel resource on which the LBT succeeds includes: The first terminal device sends the HARQ information of the plurality of second terminal devices on a feedback channel on which the LBT succeeds, where a correspondence exists between the feedback channel and the first terminal device. In the foregoing design, the first terminal device sends the HARQ information of the plurality of second terminal devices on the corresponding feedback channel, so that the second terminal device can determine the information source based on the feedback channel for receiving the HARQ information, thereby improving the accuracy of resending data by the second terminal device.

The feedback channel is determined based on the identifier of the first terminal device. According to the foregoing design, the second terminal device may determine the identifier based on the feedback channel for receiving the HARQ information, to determine, based on the identifier, a terminal device that sends the HARQ information. In this way, the accuracy of resending data by the second terminal device can be improved.

In a possible design, the first terminal device and the plurality of second terminal devices may be located in a same terminal device group, and the identifier of the first terminal device includes one or more of the following identifiers: an identifier of the terminal device group, an identifier of the first terminal device in the terminal device group, or a source node identifier (source ID) of the first terminal device. In the foregoing design, the identifier of the terminal device group and the identifier of the first terminal device in the terminal device group may occupy fewer information bits. According to the foregoing design, system overheads can be reduced.

In a possible design, the identifier of the first terminal device may include a source ID of the first terminal device. In the foregoing design, the source ID may accurately identify a terminal device, so that the second terminal device can accurately determine the terminal device that sends the HARQ information, thereby improving the accuracy of resending data by the second terminal device.

In a possible design, after the first terminal device sends the HARQ information of the plurality of second terminal devices on the channel resource on which the LBT succeeds, the first terminal device may receive indication information sent by the second terminal device, where the indication information indicates whether at least one terminal device including the first terminal device needs to resend the HARQ information. The first terminal device resends the HARQ information to the second terminal device when the indication information indicates the first terminal device to resend the HARQ information. According to the foregoing design, the first terminal device may determine, based on the indication of the second terminal device, whether to resend the HARQ information, so that some unnecessary system overheads can be avoided, and resource utilization can be improved.

According to a second aspect, an embodiment of this application provides a HARQ feedback method. The method includes: A second terminal device detects, on a channel resource, feedback information sent by a first terminal device after successfully performing LBT on the channel resource, where the feedback information includes HARQ information of a plurality of terminal devices including the second terminal device; and the second terminal device determines, based on the feedback information, HARQ information corresponding to the second terminal device.

The second terminal device has a plurality of HARQ processes, and the HARQ information of the second terminal device includes feedback information corresponding to the plurality of HARQ processes. In the foregoing design, the feedback information of the plurality of HARQ processes is sent, so that the second terminal device may resend data based on a granularity of HARQ process, thereby improving resource utilization.

The second terminal device receives an identifier of the first terminal device. According to the foregoing design, the second terminal device may determine an information source, so that accuracy of resending data by the second terminal device can be improved.

The channel resource is a feedback channel corresponding to the first terminal device. In the foregoing design, the first terminal device sends the HARQ information of the plurality of second terminal devices on the corresponding feedback channel, so that the second terminal device can determine the information source based on the feedback channel for receiving the HARQ information, thereby improving the accuracy of resending data by the second terminal device.

The feedback channel is determined based on the identifier of the first terminal device. According to the foregoing design, the second terminal device may determine the identifier based on the feedback channel for receiving the HARQ information, to determine, based on the identifier, a terminal device that sends the HARQ information. In this way, the accuracy of resending data by the second terminal device can be improved.

In a possible design, the first terminal device and the plurality of second terminal devices are located in a same terminal device group, and the identifier of the first terminal device may include one or more of the following identifiers: an identifier of the terminal device group, an identifier of the first terminal device in the terminal device group, or a source ID of the first terminal device. In the foregoing design, the identifier of the terminal device group and the identifier of the first terminal device in the terminal device group may occupy fewer information bits. According to the foregoing design, system overheads can be reduced.

In a possible design, the identifier of the first terminal device may include a source ID of the first terminal device. In the foregoing design, the source ID may accurately identify a terminal device, so that the second terminal device can accurately determine the terminal device that sends the HARQ information, thereby improving the accuracy of resending data by the second terminal device.

In a possible design, after the second terminal device detects, on the channel resource, the feedback information sent by the first terminal device, the second terminal device may determine indication information, where the indication information indicates whether the at least one first terminal device needs to resend the HARQ information; and the second terminal device sends the indication information. According to the foregoing design, the first terminal device may determine, based on the indication of the second terminal device, whether to resend the HARQ information, so that some unnecessary system overheads can be avoided, and resource utilization can be improved.

According to a third aspect, an embodiment of this application provides a HARQ feedback apparatus according to claim 9.

According to a fourth aspect, an embodiment of this application provides a computer-readable storage medium accoding to claim 10.

According to a fifth aspect, an embodiment of this application provides a computer program product according to claim 11.

In addition, for technical effects achieved by the third aspect refers to the descriptions in the first aspect to the second aspect. Details are not described herein again.

It should be noted that "coupling" in embodiments of this application indicates a direct combination or an indirect combination of two components.

### BRIEF DESCRIPTION OF DRAWINGS

FIG. 1 is a schematic diagram of an architecture of a communication system according to this application;
FIG. 2 is a schematic diagram of a D2D transmission resource according to this application;
FIG. 3 is a schematic diagram of a D2D transmission resource configuration method according to this application;
FIG. 4 is a schematic flowchart of a HARQ feedback method according to this application;
FIG. 5 is a schematic diagram of a data format according to this application;
FIG. 6 is a schematic diagram of another data format according to this application;
FIG. 7 is a schematic diagram of a PSFCH according to this application;
FIG. 8 is a schematic diagram of another PSFCH according to this application;
FIG. 9 is a schematic diagram of transmitting a PSFCH according to this application;
FIG. 10 is a schematic flowchart of another HARQ feedback method according to this application;
FIG. 11 is a schematic diagram of transmitting a PSFCH according to this application;
FIG. 12 is a schematic flowchart of another HARQ feedback method according to this application;
FIG. 13 is a schematic diagram of transmitting a PSFCH according to this application;
FIG. 14 is a schematic diagram of a structure of a HARQ feedback apparatus according to this application; and
FIG. 15 is a schematic diagram of a structure of a terminal device according to this application.

### DESCRIPTION OF EMBODIMENTS

A HARQ feedback method provided in this application may be applied to a 5G new radio (new radio, NR) unlicensed (unlicensed) system, or may be applied to another communication system, for example, an Internet of Things (Internet of Things, IoT) system, a vehicle-to-everything (vehicle-to-everything, V2X) system, a narrowband Internet of Things (narrowband Internet of Things, NB-IoT) system, an LTE system, a fifth generation (5G) communication system, a hybrid LTE and 5G architecture, an NR system, and a new communication system emerging in future communication development. The HARQ feedback method provided in embodiments of this application may be used, provided that an entity in the communication system needs to send data and another entity needs to send HARQ information corresponding to the data.

A terminal in embodiments of this application is an entity on a user side configured to receive or transmit a signal. The terminal may be a device that provides a user with voice and/or data connectivity, for example, a handheld device or a vehicle-mounted device having a wireless connection function. The terminal may alternatively be another processing device connected to a wireless modem. The terminal may communicate with one or more core networks via a radio access network (radio access network, RAN). The terminal may also be referred to as a wireless terminal, a subscriber unit (subscriber unit), a subscriber station (subscriber station), a mobile station (mobile station), a mobile (mobile) console, a remote station (remote station), an access point (access point), a remote terminal (remote terminal), an access terminal (access terminal), a user terminal (user terminal), a user agent (user agent), a user device (user device), user equipment (user equipment, UE), or the like. The terminal device may be a mobile terminal, for example, a mobile phone (or referred to as a "cellular" phone) or a computer that has a mobile terminal. For example, the terminal device may be a portable, pocket-sized, handheld, computer built-in, or vehicle-mounted mobile apparatus, which exchanges voice and/or data with the radio access network. For example, the terminal device may alternatively be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). For example, common terminal devices include a mobile phone, a tablet computer, a notebook computer, a palmtop computer, a mobile internet device (mobile internet device, MID), a wearable device such as a smartwatch, a smart band, or a pedometer, and a smart home appliance such as a smart refrigerator or a smart washing machine. However, embodiments of this application are not limited thereto.

A network device in embodiments of this application is an entity on a network side configured to transmit or receive a signal. For example, the network device may be an evolved NodeB (evolved NodeB, eNB, or e-NodeB) in LTE, a new radio controller (new radio controller, NR controller), a gNodeB (gNB) in a 5G system, a centralized network element (centralized unit), a new radio base station, a remote radio module, a micro base station, a relay (relay), a distributed network element (distributed unit), a transmission reception point (transmission reception point, TRP), a transmission point (transmission point, TP), or any other radio access device. However, embodiments of this application are not limited thereto. The network device may cover one or more cells.

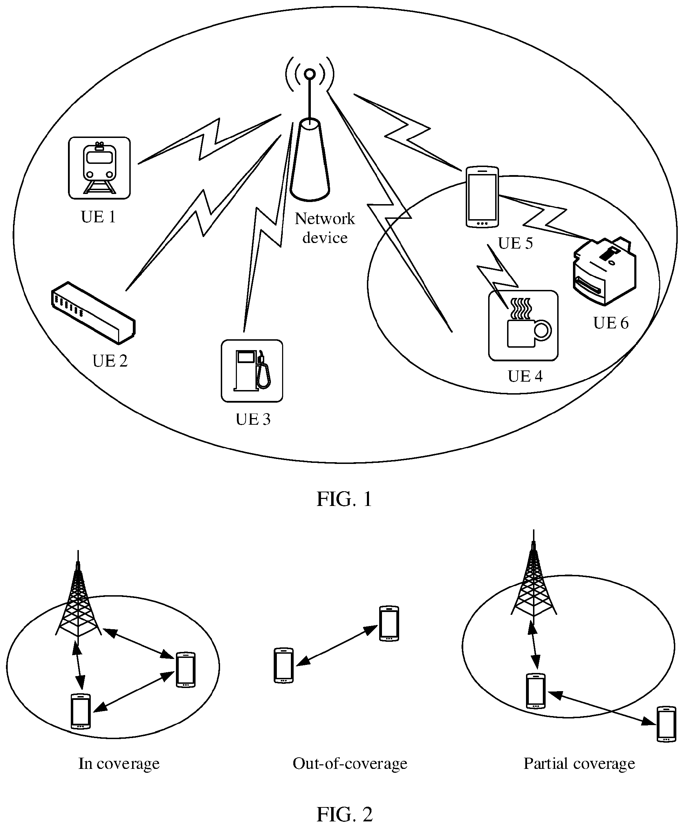

FIG. 1 shows a communication system according to an embodiment of this application. The communication system includes a network device and six terminal devices, for example, UE 1 to UE 6. In the communication system, the UE 1 to the UE 6 may send signals to the network device on an uplink, and the network device may receive the uplink signals sent by the UE 1 to the UE 6. In addition, a communication subsystem may alternatively include the UE 4 to the UE 6. The network device may send downlink signals to the UE 1, the UE 2, the UE 3, and the UE 5 on a downlink. The UE 5 may send signals to the UE 4 and the UE 6 on an inter-terminal link (sidelink, SL) based on a D2D technology. FIG. 1 is merely a schematic diagram, and a type of the communication system, a quantity of devices included in the communication system, a type of the device included in the communication system, and the like are not specifically limited in this application.

Network architectures and service scenarios described in embodiments of this application are intended to describe the technical solutions in embodiments of this application more clearly, and do not constitute a limitation on the technical solutions provided in embodiments of this application. A person of ordinary skill in the art may learn that, with evolution of the network architectures and emergence of new service scenarios, the technical solutions provided in embodiments of this application are also applicable to similar technical problems.

LTE starts to support device-to-device communication (D2D or Sidelink Communication for short) in a cellular network since 3GPP Release 12. As shown in FIG. 2, three application scenarios defined in a standard are in coverage (in coverage), out-of-coverage (out-of-coverage) and partial coverage (partial coverage).

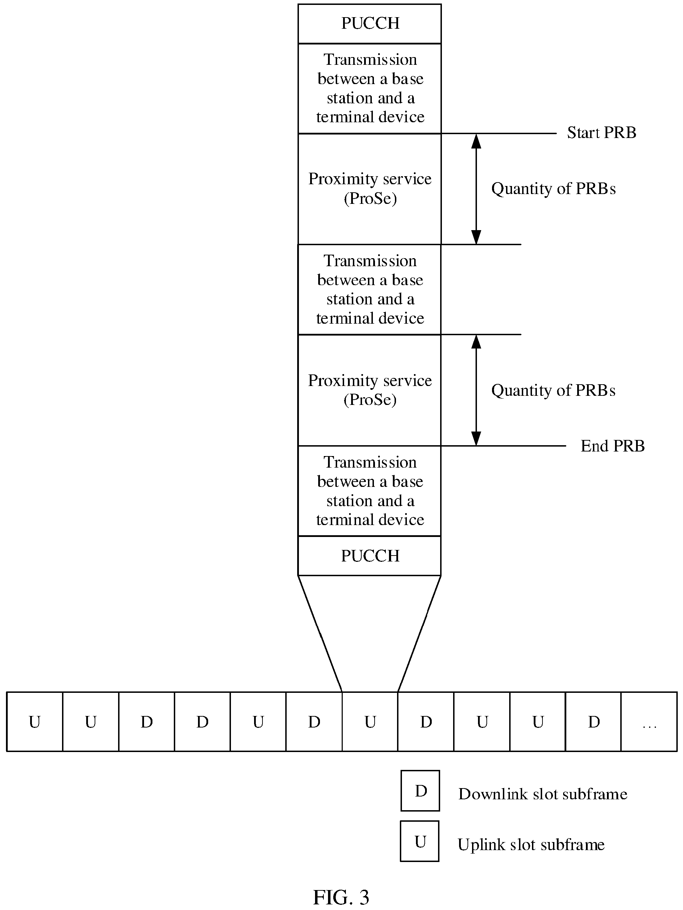

To avoid a conflict between D2D communication and existing universal user (universal user, Uu) communication, the standard specifies a resource pool used for D2D communication, to be specific, a base station configures, by using radio resource control (radio resource control, RRC) signaling, some common time-frequency resources used for D2D transmission. As shown in FIG. 3, slots (slots) used for D2D transmission are distributed in an uplink slot subframe. In a subframe used for D2D transmission, frequency resources used for sidelink transmission are divided into two subbands. For one subband, a start physical resource block (physical resource block, PRB) (that is, a PRB-Start) is used to indicate a frequency start point of the subband, and for the other subband, an end PRB (that is, a PRB-End) is used to indicate a frequency end point of the other subband. A frequency width of each subband is represented by a PRB quantity (PRB-number). A frequency resource that is not used for a sidelink may be used for transmission between the base station and a terminal.

Based on frequency bands in which D2D technologies are operated, the D2D technologies may be classified into a D2D technology that is operated in a licensed frequency band and a D2D technology that is operated in an unlicensed frequency band.

A communication system deployed in an unlicensed spectrum usually uses/shares an unlicensed resource in a contention manner. Usually, before sending a signal, a station first listens to whether the unlicensed spectrum is idle, for example, determining a busy/idle state of the unlicensed spectrum based on a magnitude of a receive power in the unlicensed spectrum. If the receive power is less than a particular threshold, it is considered that the unlicensed spectrum is in the idle state, and the signal can be sent in the unlicensed spectrum. If the receive power is not less than a particular threshold, the signal is not sent. This listen before talk mechanism is referred to as LBT.

In a HARQ mechanism of an NR sidelink system, for a sidelink, a dedicated HARQ feedback channel, namely, a PSFCH is defined. Currently, HARQ feedbacks in unicast and multicast modes are supported. In the unicast mode, point-to-point data transmission is performed between terminal devices, and in the multicast mode, point-to-multipoint data transmission is performed between terminal devices.

For the unicast mode, similar to a conventional HARQ feedback mechanism, a receiving device provides a HARQ feedback based on an actual receiving status of data, that is, if a corresponding transport block (transport block, TB) is correctly decoded, a positive acknowledgment (ACK) is fed back; otherwise, a negative acknowledgment (NACK) is fed back.

For the multicast mode, the receiving device may determine, based on a receive-transmit distance or an RSRP, whether to provide a HARQ feedback. In other words, in the multicast mode, not all receiving devices need to feed back HARQ information. However, for a receiving device that needs to provide a feedback, when a HARQ feedback is provided, there are the following two candidate solutions.

Solution 1: HARQ information is fed back only when a corresponding TB fails to be decoded and a NACK needs to be fed back. If the decoding is correct, no information is fed back. From a perspective of a sending device, if no NACK is received, it indicates that receiving of a peer device is correct.

Solution 2: A feedback is provided based on an actual receiving status, that is, if decoding is correct, an ACK is fed back; otherwise, a NACK is fed back.

A HARQ feedback resource corresponding to a PSSCH is configured in a resource pool. In an SL resource pool, a PSFCH resource is periodically configured at an interval of N slots. In other words, one period in the PSFCH resource includes N slots.

For the solution 1 in the multicast mode, the receiving device feeds back the NACK, and does not feed back any information if the receiving is correct. However, for the unlicensed spectrum, the receiving device may fail to send the NACK due to an LBT failure. In other words, the receiving device may not feed back NACK information due to the LBT failure.

Embodiments of this application provide a HARQ feedback method and apparatus. The method and the apparatus are based on a same technical concept. Because a problem-resolving principle of the method is similar to that of the apparatus, mutual reference may be made to implementations of the apparatus and the method. Repeated parts are not described in detail.

According to the method and the apparatus provided in embodiments of this application, the sending device may distinguish whether information is not fed back because the receiving device correctly receives the information, or NACK information fed back by the receiving device is not sent due to an LBT failure. This avoids inconsistent understandings of HARQ information between a receiving side and a sending side, and improves communication efficiency.

"A plurality of" in this application means two or more.

In addition, it should be understood that, in descriptions of this application, terms such as "first" and "second" are merely used for distinguishing and description, but should not be understood as an indication or implication of relative importance, or an indication or implication of a sequence.

One terminal device may receive data (for example, a PSSCH) sent by one or more other terminal devices. A terminal device receiving a PSSCH is referred to as a receiving device in the following, and a terminal device sending a PSSCH is referred to as a sending device, that is, one receiving device may receive a PSSCH sent by one or more other sending devices. It should be understood that the sending device and the receiving device are relative to each other, the sending device may also have a receiving function, and the receiving device may also have a sending function.

In embodiments of this application, a first terminal device may be a receiving device, and a second terminal device may be a sending device.

When the receiving device communicates with the sending device, the two terminal devices may directly communicate with each other without relay of a network device. For example, a manner in which the receiving device communicates with the sending device may be referred to as D2D transmission, sidelink communication, or the like. This is not specifically limited herein.

It should be understood that HARQ information may also be referred to as a HARQ codebook or the like.

In embodiments of this application, the terminal device may have one or more source node identifiers (which may also be referred to as source IDs), for example, source IDs, or may have one or more multicast IDs/group IDs, for example, destination IDs, where the multicast ID/group ID is an identifier of a terminal device group to which the terminal device belongs. Optionally, in a terminal device group, the terminal device may have a unique source ID, or may have a unique group ID. Further, the terminal device in the terminal device group may have a unique intra-group node identifier, where the intra-group node identifier is an identifier allocated to the terminal device in the terminal device group, and there is a one-to-one correspondence between the intra-group node identifier and the source node identifier of the terminal device. For example, a source ID of a terminal device is 0000, and in a terminal device group whose group ID is 05, a corresponding intra-group node identifier is 01.

The following specifically describes the HARQ feedback provided in embodiments of this application with reference to the accompanying drawings.

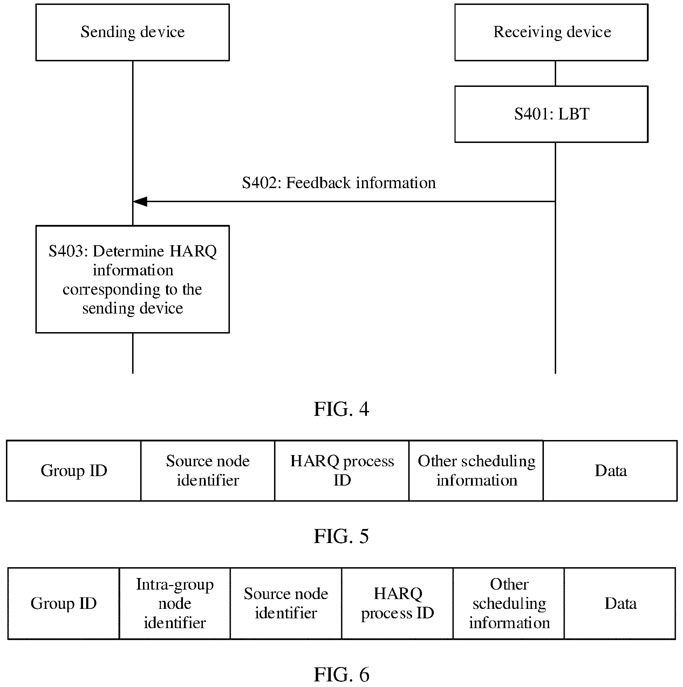

Embodiment 1: FIG. 4 is a flowchart of a HARQ feedback method according to this application. The method includes the following steps.

S401: A receiving device performs LBT.

S402: After the LBT succeeds, the receiving device sends feedback information on a channel resource on which the LBT succeeds, where the feedback information includes HARQ information of a plurality of sending devices. Correspondingly, any one of the plurality of sending devices detects, on a channel resource, the feedback information sent by the receiving device.

In an implementation, the channel resource may be a feedback channel corresponding to the receiving device. For example, the feedback channel may be a PSFCH. The following uses the PSFCH as an example for description.

S403: The sending device determines, based on the feedback information, the HARQ information corresponding to the sending device.

According to step S402, when providing a HARQ feedback, the receiving device may provide a HARQ feedback for one or more sending devices on one PSFCH. For a sending device, a HARQ feedback sent by the receiving device for the sending device may be obtained from the PSFCH sent by the receiving device.

In this embodiment of this application, the receiving device includes the HARQ information of the plurality of sending devices on one PSFCH. For different sending devices, the LBT does not need to be performed for a plurality of times, thereby reducing LBT overheads, and overcoming a problem that HARQ information corresponding to some sending devices cannot be sent in time due to an LBT failure.

One terminal device (the terminal device may be a sending device or a receiving device) may belong to one or more terminal device groups. A quantity of devices included in the terminal device group may be semi-statically configured.

In a possible implementation, the plurality of sending devices and the receiving device may belong to a same terminal device group. For example, a receiving device 1 and sending devices 2 to 4 belong to a terminal device group 1. In this implementation, the plurality of sending devices may be all terminal devices in the terminal device group except the receiving device, or the plurality of sending devices may be some terminal devices in the terminal device group except the receiving device.

In another possible implementation, the receiving device may belong to a plurality of terminal device groups, and the plurality of sending devices may belong to different terminal device groups. For example, the receiving device 1 and the sending device 2 belong to the terminal device group 1, the receiving device 1, the sending device 2, and the sending device 3 belong to a terminal device group 2, and the receiving device 1 and the sending device 4 belong to a terminal device group 3.

When sending data, the terminal device may include an identifier of the terminal device in the data.

If one terminal device needs to transmit data in a plurality of terminal device groups, an identifier carried in data may include a source ID of the terminal device. The source ID of the terminal device is carried in the data, so that another terminal device can learn of a sending source of the data. If one terminal device needs to transmit data in one terminal device group, an identifier carried in data may include at least one of the following identifiers: a source ID of the terminal device, a group ID of the terminal device group, or an intra-group node identifier of the terminal device in the terminal device group. The source ID of the terminal device is carried in the data, so that another terminal device can learn of a sending source of the data. The group ID is carried in the data, so that the another terminal device can identify a terminal device group to which the data belongs. The intra-group node identifier is carried in the data, so that the another terminal device can identify a terminal device to which the data belongs in the terminal device group. In addition, the data may further carry a HARQ process ID, used to distinguish a HARQ process to which the data belongs. During implementation, the data may also carry other scheduling information. This is not specifically limited herein.

A payload (payload) of the intra-group node identifier is less than a payload of the source ID. Therefore, compared with the manner in which the source ID of the terminal device is carried in the data, the manner in which the intra-group node identifier is carried in the data can reduce system overheads.

For example, as shown in FIG. 5, a data format may include a group ID, a source ID, a HARQ process ID, other scheduling information, and data. As shown in FIG. 6, a data format may include a group ID, an intra-group node identifier, a source ID, a HARQ process ID, other scheduling information, and data.

It may be understood that FIG. 5 and FIG. 6 are merely examples for description, and examples in FIG. 5 and FIG. 6 are merely used to logically describe information content that may be carried in data sent by the sending device. Information that is specifically carried in the data sent by the sending device and a format, for example, a sending sequence, are not limited.

From a perspective of a receiving device, a HARQ feedback needs to be provided for received information, to help a sending device determine whether data is correctly received. One receiving device may receive data sent by a plurality of sending devices. In this case, the receiving device needs to send HARQ information to each of the plurality of sending devices. In this embodiment of this application, the receiving device may provide a HARQ feedback on one PSFCH for some or all of the plurality of sending devices.

As described above, when providing the HARQ feedback, the receiving device may provide a HARQ feedback for at least one sending device on one PSFCH. In an implementation, for a sending device, if a receiving device receives data sent by the sending device, the receiving device may feed back HARQ information based on an actual receiving status. For example, if the data sent by the sending device is received and correctly decoded, an ACK is fed back. If the data sent by the sending device is received and is not correctly decoded, a NACK is fed back. If the data sent by the sending device is not received, default HARQ information such as a NACK may be fed back.

For example, a terminal device 1 may receive data from terminal devices 2 to 4, and the terminal device 2 may receive data sent by the terminal device 1, the terminal device 3, and the terminal device 4. This is similar for other terminal devices. Therefore, when providing a HARQ feedback, the terminal device 1 may include HARQ information for the terminal devices 2 to 4 on one PSFCH. Further, the sending device has a plurality of HARQ processes. When sending the HARQ feedback for the sending device, the receiving device provides a HARQ feedback for the HARQ processes of the sending device. In other words, the HARQ information of the sending device includes feedback information corresponding to the plurality of HARQ processes. In an implementation, for a HARQ process in which data is actually received, the receiving device may feed back HARQ information based on an actual receiving status. For example, if the data is received and correctly decoded, an ACK is fed back, or if the data is received but incorrectly decoded, a NACK is fed back. For a HARQ process in which data is not received, default HARQ information such as a NACK is fed back.

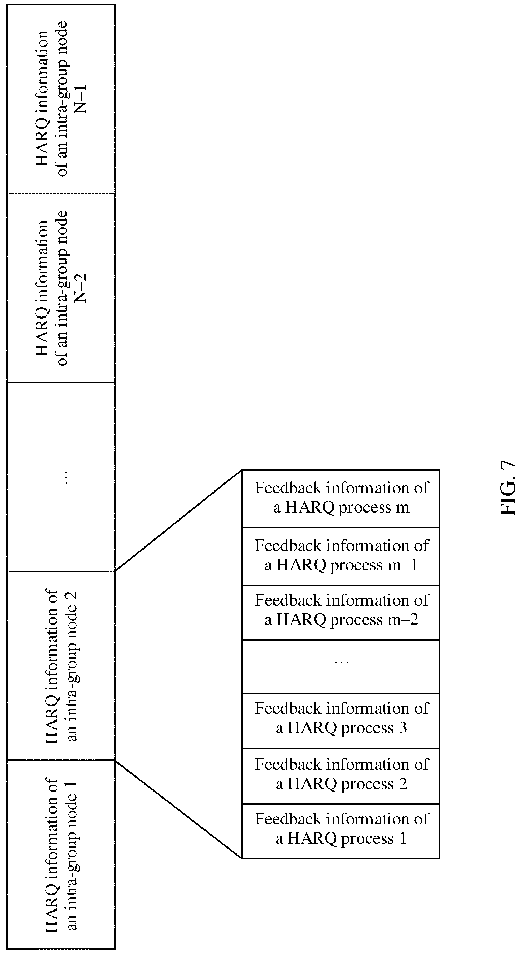

In a possible implementation, when one receiving device provides a HARQ feedback, a quantity of HARQ information carried in a sent PSFCH may be equal to a sum of quantities of HARQ processes of a plurality of sending devices. Optionally, quantities of HARQ processes of the sending devices may be the same or may be different. When the quantity of HARQ processes corresponding to each sending device is M, the quantity of HARQ information carried in the PSFCH sent by the receiving device may be equal to: (a quantity of the plurality of sending devices)*the quantity M of HARQ processes of each sending device, where M is an integer greater than 0. If one piece of HARQ information occupies one bit, the PSFCH sent by the receiving device may include: (the quantity of the plurality of sending devices)*the quantity M of HARQ processes of each sending device bits (bits). It is assumed that M is equal to 16, and the terminal devices 1 to 4 are used as an example. When the terminal device 1 provides a HARQ feedback, the PSFCH may include 3*16=48 bits. For the terminal device 1, feedback information of 16 HARQ processes of the terminal device 2, feedback information of 16 HARQ processes of the terminal device 3, and feedback information of 16 HARQ processes of the terminal device 4 may be sequentially fed back on one PSFCH. For example, FIG. 7 shows a possible PSFCH. To be specific, feedback information of HARQ processes of sending devices is sequentially fed back based on a sequence of intra-group node identifiers. It should be understood that FIG. 7 is merely an example for description. During specific implementation, the feedback information of the HARQ processes of the sending devices may alternatively be fed back based on another sequence, for example, a sequence of source node identifiers, or a sequence of HARQ process IDs. This is not specifically limited herein.

In some embodiments, M may be a maximum quantity of HARQ processes supported by one terminal device.

The receiving device further sends an identifier of the receiving device to the plurality of sending devices, where both the identifier of the receiving device and the HARQ information may be sent on the PSFCH, or the identifier of the receiving device may be sent on another control channel. This is not specifically limited herein.

In an example for description, the identifier of the receiving device may include a source node identifier of the terminal device, so that the sending device learns of a sending source of the HARQ information.

In an example for description, when the plurality of sending devices and the receiving device belong to a same terminal device, the identifier of the receiving device may include at least one of the following identifiers: a source ID of the receiving device, a group ID, or an intra-group node identifier. When the group ID is carried, it may be convenient for the sending device to identify a terminal device group from which the HARQ information comes. When the intra-group node identifier is carried, it may be convenient for the sending device to identify a terminal device and a terminal device group from which the HARQ information comes.

In addition to the HARQ information, when providing a HARQ feedback, the receiving device may further carry other feedback information on the PSFCH.

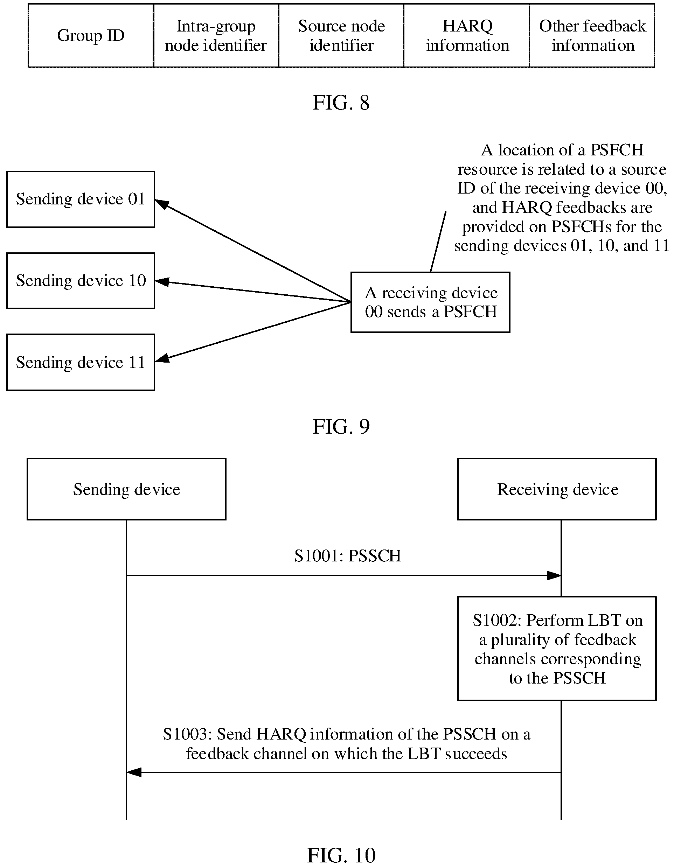

For example, as shown in FIG. 8, when both the identifier of the receiving device and the HARQ information are sent on the PSFCH, the PSFCH may include the group ID of the terminal device group to which the receiving device belongs, the intra-group node identifier allocated to the receiving device in the terminal device group, the source ID of the receiving device, the HARQ information, and other feedback information. It may be understood that FIG. 8 is merely an example for description. FIG. 8 logically describes information content that may be carried on the PSFCH, but does not constitute a limitation on information specifically carried on the PSFCH, and a format of the PSFCH, for example, a sending sequence.

The PSFCH is determined based on the identifier of the receiving device, or it may be understood that a correspondence exists between the PSFCH and the identifier of the receiving device. For example, a correspondence may exist between the PSFCH and the source node identifier of the receiving device. Alternatively, a correspondence may exist between the PSFCH and the intra-group node identifier of the receiving device. Alternatively, a correspondence may exist between the PSFCH and the source node identifier and the intra-group node identifier that are of the receiving device. Certainly, the PSFCH may also be related to another identifier of the receiving device. Examples for description of determining a PSFCH are provided below.

In an example for description, PSFCH=Fun(slot, RB, period, source node identifier of receiving device), and the formula may be understood as that a PSFCH of a receiving device may be determined by one or more of four factors: a source node identifier of the receiving device, a slot index, an RB index, and a period.

In another example for description, PSFCH resource=Fun(slot, RB, intra-group node identifier of receiving device), and the formula may be understood as that a PSFCH of a receiving device may be determined by one or more of three factors: an intra-group node identifier of the receiving device, a slot index, and an RB index.

In still another example for description, PSFCH resource=Fun(slot, RB, intra-group node identifier of receiving device, source node identifier of receiving device), and the formula may be understood as that a PSFCH of a receiving device may be determined by one or more of four factors: a source node identifier of the receiving device, an intra-group node identifier of the receiving device, a slot index, and an RB index.

It should be understood that the foregoing several examples for description do not constitute a specific limitation on embodiments of this application. During specific implementation, there may be another correspondence between the PSFCH and the receiving device, which is not listed one by one herein.

If the sending device sends data to the receiving device, a resource location of the PSFCH sent by the receiving device may be determined based on the correspondence between the PSFCH and the receiving device, and corresponding HARQ information may be received. Therefore, whether the sent data is correctly received by the receiving device can be learned.

In some embodiments, before detecting, on the PSFCH, the PSFCH sent by the receiving device, the sending device may further determine the PSFCH corresponding to the receiving device.

For example, in an implementation in which a correspondence exists between the PSFCH and the source node identifier of the receiving device, the sending device may determine, based on the source node identifier of the receiving device, the PSFCH corresponding to the receiving device, to receive, on the PSFCH, the PSFCH sent by the receiving device. For example, the sending device may determine the PSFCH corresponding to the receiving device according to PSFCH=Fun(slot, RB, period, source node identifier of receiving device).

In an implementation in which a correspondence exists between the PSFCH and the intra-group node identifier of the receiving device, the sending device may determine, based on the intra-group node identifier of the receiving device, the PSFCH corresponding to the receiving device, to receive, on the PSFCH, the PSFCH sent by the receiving device. For example, the sending device may determine the PSFCH corresponding to the receiving device according to PSFCH=Fun(slot, RB, period, intra-group node identifier of receiving device).

In an implementation in which a correspondence exists between the PSFCH and the identifier combination, the sending device may determine, based on the group ID of the receiving device and the intra-group node identifier of the receiving device, the PSFCH corresponding to the receiving device, to receive, on the PSFCH, the PSFCH sent by the receiving device. For example, the sending device may determine the PSFCH corresponding to the receiving device according to PSFCH=Fun(slot, RB, period, source node identifier of receiving device, intra-group node identifier of receiving device).

In an implementation in which another correspondence exists between the PSFCH and the receiving device, the sending device may determine, based on the correspondence, the PSFCH corresponding to the receiving device, which is not listed one by one herein.

In an example of description, assuming that a correspondence exists between the PSFCH and the source node identifier of the receiving device, a receiving device 00 may send HARQ information to sending devices 01, 10, and 11. The sending devices 01, 10, and 11 may learn of a resource location of a PSFCH of the receiving device 00 based on a source node identifier of the receiving device 00, to detect corresponding HARQ information at a corresponding location, and further determine whether data sent to the receiving device 00 is correctly received, as shown in FIG. 9.

A device that performs transmission in an unlicensed spectrum needs to perform LBT before performing transmission. Due to randomness of channel occupation, it cannot be ensured that the LBT always succeeds, that is, some transmission may fail due to an LBT failure. Before providing a HARQ feedback on the PSFCH, the receiving device also needs to perform LBT. In this case, the HARQ information may not be sent in time due to an LBT failure. According to the solutions in embodiments of this application, HARQ information of one or more sending devices is carried on one PSFCH. Even if the sending device cannot receive the HARQ information on a PSFCH due to an LBT failure, the HARQ information may be received again on another PSFCH. This minimizes impact of the LBT.

Embodiment 2: FIG. 10 is a flowchart of another HARQ feedback method according to this application. The method includes the following steps.

S1001: A sending device sends a PSSCH to a receiving device. Correspondingly, the receiving device receives the PSSCH sent by the sending device.

S1002: The receiving device performs LBT on a plurality of feedback channels corresponding to the PSSCH.

It may be understood that a PSSCH sent by the sending device may correspond to one or more receiving devices. In some scenarios, a scenario in which the PSSCH sent by the sending device corresponds to one receiving device may be referred to as a unicast scenario. In some other scenarios, a scenario in which the PSSCH sent by the sending device corresponds to a plurality of receiving devices may be referred to as a multicast scenario or a broadcast scenario. For any one of the one or more receiving devices, the PSSCH may correspond to a plurality of PSFCHs of the receiving device.

In an implementation, time domain information and/or frequency domain information of the plurality of PSFCHs corresponding to the PSSCH is/are different.

S1003: The receiving device sends HARQ information of the PSSCH to the sending device on one or more feedback channels on which the LBT succeeds. Correspondingly, the sending device detects, on a plurality of feedback channel resources corresponding to the PSSCH, the HARQ information sent by the receiving device.

For a PSSCH in this embodiment of this application, a receiving device that receives the PSSCH may have a plurality of PSFCHs that carry HARQ information of the PSSCH. In this implementation, even if the receiving device fails to perform LBT on a PSFCH, the HARQ information of the PSSCH may still be transmitted through another PSFCH corresponding to the PSSCH.

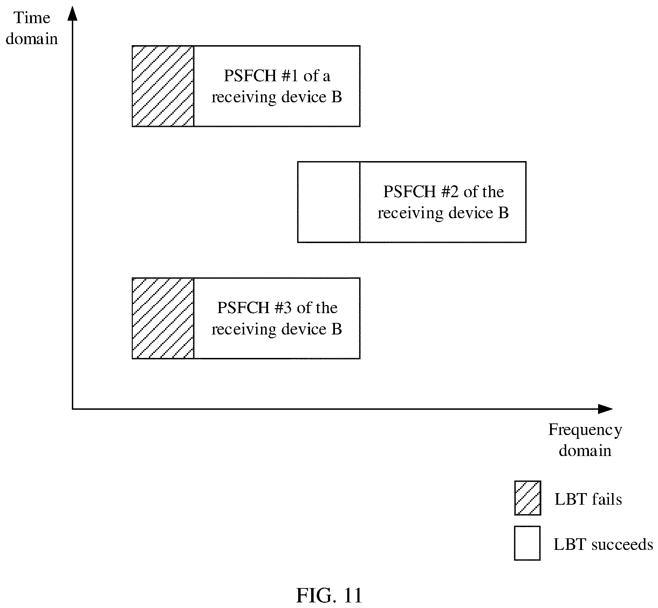

For example, a terminal device A and a terminal device B are used as an example. When the terminal device A is used as a sending device to transmit data, a correspondence exists between a sent PSSCH and a PSFCH of the receiving device B. In addition, for the PSSCH, the receiving device B may have three PSFCHs, namely, a PSFCH #1, a PSFCH #2, and a PSFCH #3, corresponding to the PSSCH, and HARQ information is carried on the PSFCH for transmission. LBT needs to be performed before transmission is performed in an unlicensed spectrum, that is, the receiving device B needs to perform LBT before transmitting the HARQ information on the PSFCH #1, the PSFCH #2, and the PSFCH #3. Therefore, the receiving device B may perform transmission on a PSFCH on which the LBT succeeds. For example, it is assumed that, before the receiving device B transmits the HARQ information on the PSFCH #1 and the PSFCH #3, the LBT fails, and therefore, a HARQ feedback cannot be provided on the PSFCH #1 and the PSFCH #3, but before the receiving device B transmits the HARQ information on the PSFCH #2, the LBT succeeds, and therefore, the corresponding HARQ information may be carried on the PSFCH #2 for transmission. This is shown in FIG. 11. With a multi-resource feedback mechanism, a problem that HARQ feedback transmission cannot be performed due to an LBT failure can be avoided.

In this embodiment of this application, the PSFCH may be determined based on an identifier of the receiving device, or it may be understood that a correspondence exists between the PSFCH and the identifier of the receiving device. For the correspondence between the PSFCH and the identifier of the receiving device, refer to related descriptions in Embodiment 1. Details are not described herein again.

If the sending device sends the PSSCH to the receiving device, a resource location of a PSFCH sent by the receiving device may be determined based on a correspondence between the PSFCH and the receiving device, and corresponding HARQ information may be received. Therefore, whether the sent PSSCH is correctly received by the receiving device can be learned.

In some embodiments, before detecting, on the PSFCH, the PSFCH sent by the receiving device, the sending device may further determine the PSFCH corresponding to the receiving device. For a process in which the sending device determines the PSFCH corresponding to the receiving device, refer to related descriptions in Embodiment 1. Details are not described herein again.

In Embodiment 2 of this application, because the PSSCH corresponds to the plurality of feedback channels, the receiving device may send the same HARQ information for a plurality of times. For example, it is assumed that, before the receiving device B transmits the HARQ information on the PSFCH #1, the LBT fails, and therefore, a HARQ feedback cannot be provided on the PSFCH #1, but before the receiving device B transmits the HARQ information on the PSFCH #2 and the PSFCH #3, the LBT succeeds, and therefore, the corresponding HARQ information may be carried on the PSFCH #2 and the PSFCH #3 for transmission.

To avoid confusion between a receiving side and a sending side, new indication information may be added to SCI, to notify the receiving side and the sending side whether a feedback at this time is a new feedback (new feedback) or a re-feedback, that is, whether currently transmitted HARQ information is newly fed back HARQ information or retransmitted HARQ information. The indication information may be sent by the sending device, or may be sent by the receiving device. For example, the indication information may be referred to as a new feedback indicator.

In addition, indication information indicating a size of the HARQ information may be further added to the SCI. Similarly, the indication information may be sent by the sending device, or may be sent by the receiving device. For example, the indication information indicating the size of the HARQ information may be referred to as a HARQ codebook size indicator or a sidelink assignment indicator.

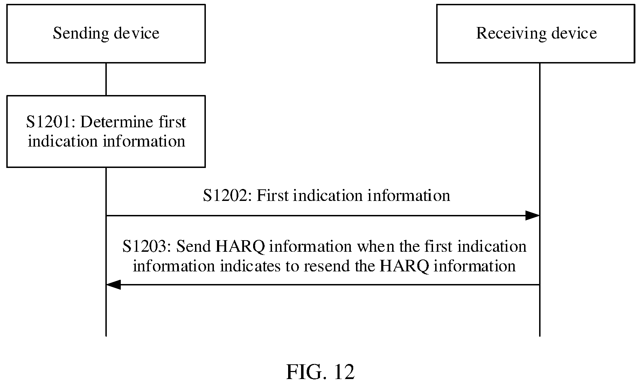

Embodiment 3: FIG. 12 is a flowchart of another HARQ feedback method according to this application. The method includes the following steps.

S1201: A sending device determines first indication information, where the first indication information indicates whether at least one receiving device needs to resend HARQ information.

The at least one receiving device and the sending device may belong to a same terminal device group.

In an example for description, the first indication information may directly indicate to resend the HARQ information, or that the HARQ information does not need to be resent. In this manner, the first indication information may be unrelated to an identifier of the at least one receiving device. Alternatively, it may be understood as that receiving devices are not distinguished for the first indication information.

For example, the first indication information may give an indication by using different values of a bit. If a value of the bit is 1, it indicates that the HARQ information needs to be resent. If a value of the bit is 0, the HARQ information does not need to be resent. For another example, inversion of a bit may also be used for indication. If the bit is inverted, it indicates that the HARQ information needs to be resent. If the bit is not inverted, the HARQ information does not need to be resent.

It may be understood that after the sending device sends the first indication information indicating to resend the HARQ information, the at least one receiving device needs to resend the HARQ information. After the sending device sends the first indication information indicating that the HARQ information does not need to be resent, the at least one receiving device does not need to resend the HARQ information.

In another example for description, the first indication information may indicate, by using a bitmap, whether the at least one receiving device needs to resend the HARQ information, and one bit may correspond to one receiving device. In an implementation, when a value of the bit is 0, it may indicate that the HARQ information does not need to be resent. When a value of the bit is 1, it may indicate that the HARQ information needs to be resent. In another implementation, when a value of the bit is 1, it may indicate that the HARQ information does not need to be resent. When a value of the bit is 0, it may indicate that the HARQ information needs to be resent.

Optionally, a length of the bitmap may be equal to a quantity of the at least one receiving device.

An example in which when the value of the bit is 0, it indicates that the HARQ information does not need to be resent, or when the value of the bit is 1, it indicates that the HARQ information needs to be resent is used for description. For receiving devices 1 to 7, the first indication information may be 1110110, indicating that the receiving devices 1 to 3, 5, and 6 need to resend the HARQ information, and the receiving device 4 and the receiving device 7 do not need to resend the HARQ information.

Alternatively, the first indication information may indicate, by using a status value, a receiving device that needs to resend the HARQ information. Table 1 describes an example of a specific manner in which the first indication information indicates, by using the status value, whether the receiving devices 1 to 4 need to resend the HARQ information.

**Table 1**

| First indication information | Receiving device that needs to resend HARQ information |
|---|---|
| 0000 | None/reserved (reserved) |
| 0001 | Receiving device 1 |
| 0010 | Receiving device 2 |
| 0011 | Receiving device 3 |
| 0100 | Receiving device 4 |
| 0101 | Receiving device 1 and receiving device 2 |
| 0110 | Receiving device 1 and receiving device 3 |
| 0111 | Receiving device 1 and receiving device 4 |
| 1000 | Receiving device 2 and receiving device 3 |
| 1001 | Receiving device 2 and receiving device 4 |
| 1010 | Receiving device 3 and receiving device 4 |
| 1011 | Receiving device 1, receiving device 2, and receiving device 3 |
| 1100 | Receiving device 1, receiving device 2, and receiving device 4 |
| 1101 | Receiving device 1, receiving device 3, and receiving device 4 |
| 1110 | Receiving device 2, receiving device 3, and receiving device 4 |
| 1111 | Receiving device 1, receiving device 2, receiving device 3, and receiving device 4 |

Alternatively, the first indication information may indicate, by using a status value, a receiving device that does not need to resend the HARQ information. A manner in which the first indication information indicates, by using the status value, the receiving device that does not need to resend the HARQ information is similar to the manner in which the first indication information indicates, by using the status value, the receiving device that needs to resend the HARQ information.

In the three manners in the foregoing another example for description, the first indication information may be related to the identifier of the at least one receiving device.

The device identifier may be unique identification information that can enable each device to be distinguished from any other device. For example, the device identifier may be an international mobile equipment identity IMEI, intra-group identification information for distinguishing identification information of different devices in a group, or other identification information for distinguishing different devices. This is not limited in the present invention.

S1202: The sending device sends the first indication information. Correspondingly, the at least one receiving device receives the first indication information.

S1203: The receiving device resends the HARQ information to the sending device when the first indication information indicates the receiving device to resend the HARQ information.

One receiving device may receive data sent by one or more sending devices. Similarly, one sending device may receive HARQ information sent by one or more receiving devices. If the data sent by the sending device is not correctly received by the receiving device, retransmission needs to be performed. Therefore, the HARQ information sent by the receiving device helps the sending device determine whether to perform retransmission. In an unlicensed spectrum, the receiving device needs to perform LBT before sending the HARQ information. The LBT is uncertain, that is, the receiving device may fail to send the HARQ information due to an LBT failure. A PSFCH location corresponding to the receiving device is related to the identifier of the receiving device, and the PSFCH is used to send the HARQ information. After sending a PSSCH, the sending device detects corresponding HARQ information on a PSFCH corresponding to the receiving device, to determine whether the sent PSSCH is correctly received by the receiving device. It may be understood that when the receiving device does not send the HARQ information on the corresponding PSFCH due to an LBT failure, the sending device cannot detect the HARQ information on the corresponding PSFCH. In this case, the sending device may indicate the receiving device to resend the HARQ information. Therefore, a problem that HARQ information corresponding to some sending devices cannot be sent in time due to an LBT failure can be overcome.

Because the sending device may correspond to one or more potential receiving devices, the first indication information sent by the sending device may indicate whether a plurality of receiving devices need to resend the HARQ information. In this way, system overheads can be reduced.

In a possible implementation, PSFCHs corresponding to different receiving devices may be at a same time-frequency resource location or different time-frequency resource locations. When time-frequency resources of the PSFCHs corresponding to the different receiving devices are different, a correspondence between the receiving device and the PSFCH is similar to the correspondence between the receiving device and the PSFCH in Embodiment 1 and Embodiment 2, and repeated parts are not described in detail again. When time-frequency resources of the PSFCHs corresponding to the different receiving devices are the same, HARQ information of the different receiving devices may be distinguished in another manner, for example, a code division manner.

An example in which the sending device and at least one device belong to a same terminal device group is used for description. It is assumed that a maximum quantity of terminal devices supported in a terminal device group whose group identifier is 05 is 4, and intra-group node identifiers corresponding to the four terminal devices are respectively 00, 01, 10, and 11. Each of the four terminal devices has a unique corresponding source node identifier. For example, a source node identifier corresponding to the terminal device 00 is 0001. Data sent by the terminal device 00 may be received by the terminal device 01, the terminal device 10, and the terminal device 11. Therefore, the terminal device 01, the terminal device 10, and the terminal device 11 all need to provide HARQ feedbacks, and the terminal device 00 may detect HARQ information on PSFCHs corresponding to the terminal device 01, the terminal device 10, and the terminal device 11. It may be understood that, in an unlicensed spectrum, the terminal device 01, the terminal device 10, and the terminal device 11 all need to perform LBT before sending the HARQ information, that is, the terminal device 01, the terminal device 10, and the terminal device 11 all may fail to send the HARQ information on the PSFCHs corresponding to the terminal devices due to an LBT failure. It is assumed that the terminal device 10 fails to send the HARQ information due to the LBT failure. In this case, the terminal device 00 may give an indication by using 3-bit bitmap information. The first bit corresponds to the terminal device 01, the second bit corresponds to the terminal device 10, and the third bit corresponds to the terminal device 11. Therefore, "010" may indicate the terminal device 10 to resend the HARQ information. A bit "1" in the bitmap information indicates that a corresponding receiving device needs to resend the HARQ information.

In some embodiments, before step S1203 is performed, the sending device may further send second indication information, where the second indication information indicates whether the at least one receiving device needs to combine and send HARQ information that is not successfully sent and HARQ information that is to be sent next time. Correspondingly, the receiving device may receive the second indication information sent by the sending device.

The HARQ information that is to be sent next time may be currently to-be-sent HARQ information or HARQ information that is to be sent in the future.

Optionally, the second indication information and the first indication information may give indications separately, or may give indications simultaneously. For simultaneous indication, in a possible implementation, when indicating that the at least one receiving device needs to resend the HARQ information, the first indication information may simultaneously indicate whether the HARQ information that is not successfully sent and the HARQ information that is to be sent next time need to be combined and sent.

An indication manner of the second indication information is similar to an indication manner of the first indication information, where indication content is different, but the indication manners are the same. For the indication manner of the second indication information, refer to the indication manner of the first indication information. Details are not described herein again.

It may be understood that one PSSCH may be transmitted in one HARQ process. A correspondence exists between the HARQ information and the PSSCH sent by the sending device, and a correspondence also exists between the HARQ information and a HARQ process for transmitting the PSSCH.

For example, the second indication information may give an indication based on the PSSCH. In this implementation, the second indication information may alternatively indicate PSSCH information corresponding to HARQ information that needs to be combined and sent. This may also be understood as that the second indication information may indicate PSSCHs with corresponding HARQ information that needs to be combined.

The second indication information may alternatively indicate based on a HARQ process. In this implementation, the second indication information may alternatively indicate HARQ process information corresponding to HARQ information that needs to be combined and sent. This may also be understood as that the second indication information may indicate HARQ processes with corresponding HARQ information that needs to be combined.

The second indication information may alternatively indicate one or more of the following quantity information: a quantity of PSSCHs with HARQ information that needs to be combined and sent, a quantity of PSSCH sets with HARQ information that needs to be combined and sent, a quantity of HARQ processes in which HARQ information needs to be combined and sent, and the like.

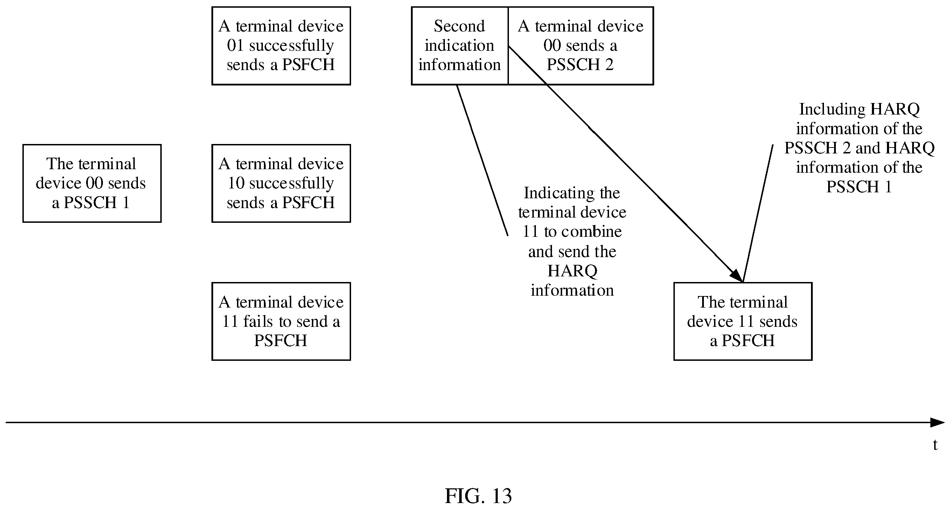

For example, as shown in FIG. 13, after the terminal device 00 sends a PSSCH 1, the terminal device 01, the terminal device 10, and the terminal device 11 may send HARQ information of the PSSCH 1 on their respective first PSFCHs. It is assumed that the terminal device 11 fails to send the HARQ information of the PSSCH 1 due to an LBT failure. In this case, before the terminal device 00 sends a PSSCH 2, the terminal device 11 may be indicated by the second indication information to combine the HARQ information of the PSSCH 1 and HARQ information of a subsequent PSSCH (for example, the PSSCH 2 or a future PSSCH 3) for sending. For example, the second indication information may indicate, by using a bitmap=001, that the terminal device 11 needs to perform HARQ information combination. Optionally, the second indication information may indicate whether HARQ information of the terminal device 11 is to be combined with future HARQ information. For example, an indication may be given by a bit of the second indication information. If the bit is 1, it indicates that the HARQ information of the terminal device 11 is to be combined with HARQ information of a future PSSCH (for example, the PSSCH 3) rather than HARQ information of the current PSSCH 2. In FIG. 13, the second PSFCH of the terminal device 11 corresponds to a HARQ feedback of the current PSSCH 2, and the third PSFCH corresponds to a HARQ feedback of the future PSSCH (for example, the PSSCH 3). If the bit is 0, it indicates that HARQ information combination needs to be performed on the third PSFCH.

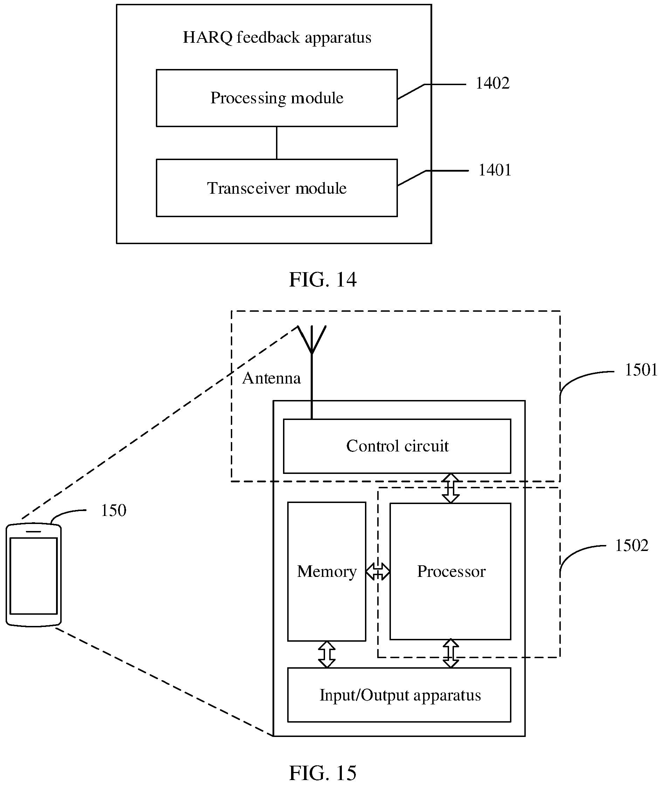

Based on a same invention concept as the method embodiments, an embodiment of this application provides a HARQ feedback apparatus. A structure of the HARQ feedback apparatus may be shown in FIG. 14, and includes a transceiver module 1401 and a processing module 1402.

In an implementation, the HARQ feedback apparatus may be specifically configured to implement the methods performed by the receiving device in the embodiments in FIG. 4 to FIG. 9. The apparatus may be the receiving device, or may be a chip or a chip set in the receiving device, or a part of a chip configured to perform a related method function. The processing module 1402 is configured to perform LBT. The transceiver module 1401 is configured to: after the LBT succeeds, send HARQ information of a plurality of second terminal devices on a channel resource on which the LBT succeeds.

Any second terminal device has a plurality of HARQ processes, and HARQ information of the second terminal device includes feedback information corresponding to the plurality of HARQ processes.

The transceiver module 1401 is further configured to send an identifier of a first terminal device to the plurality of second terminal devices.

When sending the HARQ information of the plurality of second terminal devices on the channel resource on which the LBT succeeds, the transceiver module 1401 is specifically configured to send the HARQ information of the plurality of second terminal devices on a feedback channel on which the LBT succeeds. A correspondence exists between the feedback channel and the first terminal device.

The feedback channel is determined based on the identifier of the first terminal device.

Optionally, the first terminal device and the plurality of second terminal devices are located in a same terminal device group, and the identifier of the first terminal device includes one or more of the following identifiers: an identifier of the terminal device group, an identifier of the first terminal device in the terminal device group, or a source ID of the first terminal device.

Alternatively, the identifier of the first terminal device includes a source ID of the first terminal device.

The transceiver module 1401 is further configured to: after sending the HARQ information of the plurality of second terminal devices on the channel resource on which the LBT succeeds, receive indication information sent by the second terminal device, where the indication information indicates whether at least one terminal device including the first terminal device needs to resend the HARQ information; and resend the HARQ information to the second terminal device when the indication information indicates the first terminal device to resend the HARQ information.

In another implementation, the HARQ feedback apparatus may be specifically configured to implement the methods performed by the sending device in the embodiments in FIG. 4 to FIG. 9. The apparatus may be the sending device, or may be a chip or a chip set in the sending device, or a part of a chip configured to perform a related method function. The transceiver module 1401 is configured to detect, on a channel resource, feedback information sent by a first terminal device, where the feedback information includes HARQ information of a plurality of terminal devices including a second terminal device. The processing module 1402 is configured to determine, based on the feedback information, HARQ information corresponding to the second terminal device.

The second terminal device has a plurality of HARQ processes, and the HARQ information of the second terminal device includes feedback information corresponding to the plurality of HARQ processes.

The transceiver module 1401 is further configured to receive an identifier of the first terminal device.

Further, the channel resource is a feedback channel corresponding to the first terminal device.

Additionally, the feedback channel is determined based on the identifier of the first terminal device.

Optionally, the first terminal device and the plurality of second terminal devices are located in a same terminal device group, and the identifier of the first terminal device includes one or more of the following identifiers: an identifier of the terminal device group, an identifier of the first terminal device in the terminal device group, or a source ID of the first terminal device.

Alternatively, the identifier of the first terminal device includes a source ID of the first terminal device.

The processing module 1402 is further configured to: after the transceiver module 1401 detects, on the channel resource, the feedback information sent by the first terminal device, determine indication information, where the indication information indicates whether the at least one first terminal device needs to resend the HARQ information. The transceiver module 1401 is further configured to send the indication information.

In still another implementation, the HARQ feedback apparatus may be specifically configured to implement the methods performed by the receiving device in the embodiments in FIG. 10 to FIG. 11. The apparatus may be the receiving device, or may be a chip or a chip set in the receiving device, or a part of a chip configured to perform a related method function. The transceiver module 1401 is configured to receive a PSSCH sent by a second terminal device. The processing module 1402 is configured to perform LBT on a plurality of feedback channels corresponding to the PSSCH. The transceiver module 1401 is further configured to send HARQ information of the PSSCH to the second terminal device on one or more feedback channels on which the LBT succeeds.

The transceiver module 1401 is further configured to: send SCI to the second terminal device, or receive SCI sent by the second terminal device. The SCI carries indication information indicating that the HARQ information is newly fed back HARQ information, or the SCI carries indication information indicating that the HARQ information is retransmitted HARQ information.

For example, the SCI further carries indication information indicating a size of the HARQ information.

Optionally, a correspondence exists between the feedback channel and a first terminal device.

Further, the feedback channel is determined based on an identifier of the first terminal device.

For example, the first terminal device and a plurality of second terminal devices are located in a same terminal device group, and the identifier of the first terminal device includes one or more of the following identifiers: an identifier of the terminal device group, an identifier of the first terminal device in the terminal device group, or a source ID of the first terminal device.

Alternatively, the identifier of the first terminal device includes a source ID of the first terminal device.

The transceiver module 1401 is further configured to: after sending the HARQ information of the PSSCH to the second terminal device on the one or more feedback channels on which the LBT succeeds, receive first indication information sent by the second terminal device, where the first indication information indicates whether at least one terminal device including the first terminal device needs to resend the HARQ information; and resend the HARQ information to the second terminal device when the first indication information indicates the first terminal device to resend the HARQ information.

In yet another implementation, the HARQ feedback apparatus may be specifically configured to implement the methods performed by the sending device in the embodiments in FIG. 10 to FIG. 11. The apparatus may be the sending device, or may be a chip or a chip set in the sending device, or a part of a chip configured to perform a related method function. The transceiver module 1401 is configured to: send a PSSCH to a first terminal device; and detect, on a plurality of feedback channels corresponding to the PSSCH, HARQ information sent by the first terminal device.

The transceiver module 1401 is further configured to: receive SCI sent by the first terminal device, or send SCI to the first terminal device. The SCI carries indication information indicating that the HARQ information is newly fed back HARQ information, or the SCI carries indication information indicating that the HARQ information is retransmitted HARQ information.

For example, the SCI further carries indication information indicating a size of the HARQ information.

Optionally, a correspondence exists between the feedback channel and the first terminal device.

The apparatus further includes the processing module 1402, configured to determine the feedback channel based on an identifier of the first terminal device.

For example, the first terminal device and a plurality of second terminal devices are located in a same terminal device group, and the identifier of the first terminal device includes one or more of the following identifiers: an identifier of the terminal device group, an identifier of the first terminal device in the terminal device group, or a source ID of the first terminal device.

Alternatively, the identifier of the first terminal device includes a source ID of the first terminal device.

The processing module 1402 is configured to: after the HARQ information sent by the first terminal device is detected on the plurality of feedback channels corresponding to the PSSCH, determine first indication information, where the first indication information indicates whether at least one first terminal device needs to resend the HARQ information; and the transceiver module 1401 is further configured to send the first indication information.

In still another implementation, the HARQ feedback apparatus may be specifically configured to implement the methods performed by the receiving device in the embodiments in FIG. 12 to FIG. 13. The apparatus may be the receiving device, or may be a chip or a chip set in the receiving device, or a part of a chip configured to perform a related method function. The transceiver module 1401 is configured to: receive first indication information sent by a second terminal device, where the first indication information indicates whether at least one terminal device including a first terminal device needs to resend HARQ information; and resend the HARQ information to the second terminal device when the first indication information indicates the first terminal device to resend the HARQ information.

In an example for description, the first indication information indicates to resend the HARQ information, or the first indication information indicates that the HARQ information does not need to be resent.

In another example for description, the first indication information indicates, by using a bitmap, whether the at least one terminal device needs to resend the HARQ information; the first indication information indicates, by using a status value, a terminal device that needs to resend the HARQ information; or the first indication information indicates, by using a status value, a terminal device that does not need to resend the HARQ information.

The transceiver module 1401 is further configured to receive second indication information sent by the second terminal device, where the second indication information indicates whether the at least one terminal device needs to combine and send HARQ information that is not successfully sent and HARQ information that is to be sent next time.

The second indication information is unrelated to an identifier of the at least one terminal device. The second indication information indicates that the HARQ information that is not successfully sent and the HARQ information that is to be sent next time need to be combined and sent, or the second indication information indicates that the HARQ information that is not successfully sent and the HARQ information that is to be sent next time do not need to be combined and sent.

Alternatively, the second indication information is related to an identifier of the at least one terminal device. The second indication information indicates, by using a bitmap, whether the at least one terminal device needs to combine and send the HARQ information that is not successfully sent and the HARQ information that is to be sent next time; the second indication information indicates, by using a status value, a terminal device that needs to combine and send the HARQ information that is not successfully sent and the HARQ information that is to be sent next time; or the second indication information indicates, by using a status value, a terminal device that does not need to combine and send the HARQ information that is not successfully sent and the HARQ information that is to be sent next time.

Optionally, the second indication information further indicates PSSCH information corresponding to HARQ information that needs to be combined and sent. Alternatively, the second indication information further indicates HARQ process information corresponding to HARQ information that needs to be combined and sent.

When resending the HARQ information to the second terminal device, the transceiver module 1401 is specifically configured to combine and send the HARQ information that is not successfully sent and the HARQ information that is to be sent next time.

For example, the at least one terminal device and the second terminal device belong to a same terminal device group.

In still another implementation, the HARQ feedback apparatus may be specifically configured to implement the methods performed by the sending device in the embodiments in FIG. 12 to FIG. 13. The apparatus may be the sending device, or may be a chip or a chip set in the sending device, or a part of a chip configured to perform a related method function. The processing module 1402 is configured to determine first indication information, where the first indication information indicates whether at least one first terminal device needs to resend HARQ information. The transceiver module 1401 is configured to send the first indication information.

In an example for description, the first indication information is unrelated to an identifier of the at least one first terminal device. The first indication information indicates to resend the HARQ information, or the first indication information indicates that the HARQ information does not need to be resent.

In another example for description, the first indication information is related to an identifier of the at least one first terminal device. The first indication information indicates, by using a bitmap, whether the at least one first terminal device needs to resend the HARQ information; the first indication information indicates, by using a status value, a first terminal device that needs to resend the HARQ information; or the first indication information indicates, by using a status value, a first terminal device that does not need to resend the HARQ information.

The transceiver module 1401 is further configured to send second indication information, where the second indication information indicates whether the at least one first terminal device needs to combine and send HARQ information that is not successfully sent and HARQ information that is to be sent next time.

For example, the second indication information is unrelated to the identifier of the at least one first terminal device. The second indication information indicates that the HARQ information that is not successfully sent and the HARQ information that is to be sent next time need to be combined and sent, or the second indication information indicates that the HARQ information that is not successfully sent and the HARQ information that is to be sent next time do not need to be combined and sent.

For example, the second indication information is related to the identifier of the at least one first terminal device. The second indication information indicates, by using a bitmap, whether the at least one first terminal device needs to combine and send the HARQ information that is not successfully sent and the HARQ information that is to be sent next time; the second indication information indicates, by using a status value, a first terminal device that needs to combine and send the HARQ information that is not successfully sent and the HARQ information that is to be sent next time; or the second indication information indicates, by using a status value, a first terminal device that does not need to combine and send the HARQ information that is not successfully sent and the HARQ information that is to be sent next time.

Optionally, the second indication information further indicates PSSCH information corresponding to HARQ information that needs to be combined and sent. Alternatively, the second indication information further indicates HARQ process information corresponding to HARQ information that needs to be combined and sent.

For example, the at least one first terminal device and a second terminal device belong to a same terminal device group.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for functions or implementations of the modules in embodiments of this application, further refer to related descriptions in the method embodiments.

FIG. 15 is a schematic diagram of a structure of a terminal device according to an embodiment of this application. The terminal device is used in the system shown in FIG. 1, and performs functions of the terminal device in the foregoing method embodiments. For ease of description, FIG. 15 shows only main components of the terminal device. As shown in FIG. 15, the terminal device 150 includes a processor, a memory, a control circuit, an antenna, and an input/output apparatus.

The processor is mainly configured to: process a communication protocol and communication data, control an entire terminal device, execute a software program, and process data of the software program, for example, support the terminal device in performing the actions described in the foregoing method embodiments, for example, performing LBT. The memory is mainly configured to store the software program and data. The control circuit is mainly configured to: perform conversion between a baseband signal and a radio frequency signal, and process the radio frequency signal. The control circuit and the antenna may also be collectively referred to as a transceiver that is mainly configured to receive and send a radio frequency signal in a form of an electromagnetic wave. For example, under control of the processor and after the LBT succeeds, HARQ information of a plurality of second terminal devices is sent on a channel resource on which the LBT succeeds. The input/output apparatus, such as a touchscreen, a display, or a keyboard, is mainly configured to receive data input by a user, and output data to the user.

After the terminal device is powered on, the processor may read the software program in the memory, explain and execute instructions of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 15 shows only one memory and only one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in this embodiment of this application.

In an optional implementation, the terminal device may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor in FIG. 15. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and all components of the terminal device may be connected to each other through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

In this embodiment of this application, the antenna and the control circuit that have receiving and sending functions may be considered as a transceiver unit 1501 of the terminal device 150, for example, to support the terminal device in performing the receiving function and the sending function. A processor 1502 having a processing function is considered as a processing unit 1502 of the terminal device 150. As shown in FIG. 15, the terminal device 150 includes the transceiver unit 1501 and the processing unit 1502. The transceiver unit may also be referred to as a transceiver, a transceiver machine, a transceiver apparatus, or the like. Optionally, a component that is in the transceiver unit 1501 and that is configured to implement the receiving function may be considered as a receiving unit, and a component that is in the transceiver unit 1501 and that is configured to implement the sending function may be considered as a sending unit. In other words, the transceiver unit 1501 includes the receiving unit and the sending unit. The receiving unit may also be referred to as a receiver, an input port, a receiving circuit, or the like. The sending unit may be referred to as a transmitter machine, a transmitter, a transmitting circuit, or the like.

The processor 1502 may be configured to execute the instructions stored in the memory to control the transceiver unit 1501 to receive a signal and/or send a signal, to complete functions of the terminal device in the foregoing method embodiments. Specifically, the processor 1502 may implement the functions of the processing module 1402 shown in FIG. 14. For specific functions, refer to related descriptions of the processing module 1402. Details are not described herein again. The processor 1502 further includes an interface, configured to implement a signal input/output function. In an implementation, the functions of the transceiver unit 1501 may be implemented by using a transceiver circuit or a dedicated transceiver chip. The transceiver unit 1501 may implement the functions of the transceiver module 1401 shown in FIG. 14. For specific functions, refer to related descriptions of the transceiver module 1401. Details are not described herein again.

An embodiment of the present invention further provides a computer-readable storage medium, configured to store computer software instructions that need to be executed by the processor. The computer software instructions include a program that needs to be executed by the processor.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or any other programmable data processing device, so that a series of operations and steps are performed on the computer or any other programmable device, to generate computer-implemented processing. Therefore, the instructions executed on the computer or any other programmable device provide steps for implementing a specific function in one or more processes in the flowcharts and/or in one or more blocks in the block diagrams.

Clearly, persons skilled in the art can make various modifications and variations to embodiments of this application without departing from the scope of embodiments of this application. This application is intended to cover these modifications and variations of embodiments of this application provided that they fall within the scope defined by the following claims.

## Claims

1. A hybrid automatic repeat request, HARQ, feedback method, wherein the method comprises:
performing (S401), by a first terminal device or a chip for a first terminal device, listen before talk, LBT; and
after the LBT succeeds, sending (S402), by the first terminal device or the chip, HARQ information of a plurality of second terminal devices on a channel resource on which the LBT succeeds,
wherein any second terminal device has a plurality of HARQ processes, and HARQ information of the second terminal device comprises feedback information corresponding to the plurality of HARQ processes,
wherein the method further comprises:
sending, by the first terminal device or the chip, an identifier of the first terminal device to the plurality of second terminal devices;
wherein the sending (S402), by the first terminal device or the chip, HARQ information of a plurality of second terminal devices on a channel resource on which the LBT succeeds comprises:
sending, by the first terminal device or the chip, the HARQ information of the plurality of second terminal devices on a feedback channel on which the LBT succeeds, wherein a correspondence exists between the feedback channel and the first terminal device, and
wherein the feedback channel is determined based on the identifier of the first terminal device.

2. The method according to claim 1, wherein the first terminal device and the plurality of second terminal devices are located in a same terminal device group, and the identifier of the first terminal device comprises one or more of the following identifiers: an identifier of the terminal device group, an identifier of the first terminal device in the terminal device group, or a source node identifier source ID of the first terminal device.

3. The method according to claim 1, wherein the identifier of the first terminal device comprises a source ID of the first terminal device.

4. The method according to any one of claims 1 to 3, wherein after the sending, by the first terminal device or the chip, HARQ information of a plurality of second terminal devices on a channel resource on which the LBT succeeds, the method further comprises:
receiving, by the first terminal device or the chip, indication information sent by the second terminal device, wherein the indication information indicates whether at least one terminal device comprising the first terminal device needs to resend HARQ information; and
resending, by the first terminal device or the chip, the HARQ information to the second terminal device when the indication information indicates the first terminal device to resend the HARQ information.

5. A hybrid automatic repeat request, HARQ, feedback method, wherein the method comprises:
detecting, by a second terminal device or a chip for a second terminal device, on a channel resource, feedback information sent by a first terminal device after successfully performing listen before talk, LBT, on the channel resource, wherein the feedback information comprises HARQ information of a plurality of terminal devices comprising the second terminal device; and
determining (S403), by the second terminal device or the chip, based on the feedback information, HARQ information corresponding to the second terminal device,
wherein the second terminal device has a plurality of HARQ processes, and the HARQ information of the second terminal device comprises feedback information corresponding to the plurality of HARQ processes,
wherein the method further comprises:
receiving, by the second terminal device or the chip, an identifier of the first terminal device;
wherein the channel resource is a feedback channel corresponding to the first terminal device, and
wherein the feedback channel is determined based on the identifier of the first terminal device.

6. The method according to claim 5, wherein the first terminal device and the plurality of second terminal devices are located in a same terminal device group, and the identifier of the first terminal device comprises one or more of the following identifiers: an identifier of the terminal device group, an identifier of the first terminal device in the terminal device group, or a source node identifier source ID of the first terminal device.

7. The method according to claim 5, wherein the identifier of the first terminal device comprises a source ID of the first terminal device.

8. The method according to any one of claims 5 to 7, wherein after the detecting, by a second terminal device or a chip for a second terminal device, on a channel resource, feedback information sent by a first terminal device, the method further comprises:
determining, by the second terminal device or the chip, indication information, wherein the indication information indicates whether the at least one first terminal device needs to resend the HARQ information; and
sending, by the second terminal device or the chip, the indication information.

9. A hybrid automatic repeat request HARQ feedback apparatus, wherein the apparatus is configured to implement the method according to any one of claims 1 to 4; or implement the method according to any one of claims 5 to 8.

10. A computer-readable storage medium storing a program or instructions which, when being read and executed by one or more processors, cause the one or more processors to perform the method according to any one of claims 1 to 8.

11. A computer program product which, when running on and executed by an electronic device, causes the electronic device to perform the method according to any one of claims 1 to 8.

## Patentansprüche

1. Hybrides automatisches Wiederholungsanforderungsrückkopplungsverfahren, HARQ-Rückkopplungsverfahren, wobei das Verfahren Folgendes umfasst:
Durchführen (S401) von Listen-Before-Talk, LBT, durch eine erste Endgerätevorrichtung oder einen Chip für eine erste Endgerätevorrichtung; und
nach erfolgreichem LBT, Senden (S402) von HARQ-Informationen einer Vielzahl von zweiten Endgerätevorrichtungen auf einer Kanalressource, auf welcher LBT erfolgreich ist, durch die erste Endgerätevorrichtung oder den Chip,
wobei eine beliebige zweite Endgerätevorrichtung eine Vielzahl von HARQ-Prozessen aufweist, und HARQ-Informationen der zweiten Endgerätevorrichtung Rückkopplungsinformationen entsprechend der Vielzahl von HARQ-Prozessen umfassen,
wobei das Verfahren ferner Folgendes umfasst:
Senden einer Kennung der ersten Endgerätevorrichtung durch die erste Endgerätevorrichtung oder den Chip an die Vielzahl von zweiten Endgerätevorrichtungen;
wobei das Senden (S402) von HARQ-Informationen einer Vielzahl von zweiten Endgerätevorrichtungen auf einer Kanalressource, auf welcher LBT erfolgreich ist, durch die erste Endgerätevorrichtung oder den Chip Folgendes umfasst:
Senden der HARQ-Informationen der Vielzahl von zweiten Endgerätevorrichtungen auf einem Rückkopplungskanal, auf welchem LBT erfolgreich ist, durch die erste Endgerätevorrichtung oder den Chip, wobei eine Entsprechung zwischen dem Rückkopplungskanal und der ersten Endgerätevorrichtung besteht, und
wobei der Rückkopplungskanal basierend auf der Kennung der ersten Endgerätevorrichtung bestimmt wird.

2. Verfahren nach Anspruch 1, wobei sich die erste Endgerätevorrichtung und die Vielzahl von zweiten Endgerätevorrichtungen in derselben Endgerätevorrichtungsgruppe befinden, und die Kennung der ersten Endgerätevorrichtung eine oder mehrere der folgenden Kennungen umfasst: eine Kennung der Endgerätevorrichtungsgruppe, eine Kennung der ersten Endgerätevorrichtung in der Endgerätevorrichtungsgruppe oder eine Quellen-ID der Quellknotenkennung der ersten Endgerätevorrichtung.

3. Verfahren nach Anspruch 1, wobei die Kennung der ersten Endgerätevorrichtung eine Quellen-ID der ersten Endgerätevorrichtung umfasst.

4. Verfahren nach einem der Ansprüche 1 bis 3, wobei das Verfahren nach dem Senden von HARQ-Informationen einer Vielzahl von zweiten Endgerätevorrichtungen auf einer Kanalressource, auf welcher LBT erfolgreich ist, durch die erste Endgerätevorrichtung oder den Chip ferner Folgendes umfasst:
Empfangen von Anzeigeinformationen, die durch die zweite Endgerätevorrichtung gesendet werden, durch die erste Endgerätevorrichtung oder den Chip, wobei die Anzeigeinformationen anzeigen, ob mindestens eine Endgerätevorrichtung, umfassend die erste Endgerätevorrichtung, HARQ-Informationen erneut senden muss; und
erneutes Senden der HARQ-Informationen durch die erste Endgerätevorrichtung oder den Chip an die zweite Endgerätevorrichtung, wenn die Anzeigeinformationen die erste Endgerätevorrichtung anweisen, die HARQ-Informationen erneut zu senden.

5. Hybrides automatisches Wiederholungsanforderungsrückkopplungsverfahren, HARQ-Rückkopplungsverfahren, wobei das Verfahren Folgendes umfasst:
Erkennen von Rückkopplungsinformationen, die durch eine erste Endgerätevorrichtung nach erfolgreichem Durchführen von Listen-Before-Talk, LBT, auf einer Kanalressource gesendet werden, durch eine zweite Endgerätevorrichtung oder einen Chip für eine zweite Endgerätevorrichtung auf einer Kanalressource, wobei die Rückkopplungsinformationen HARQ-Informationen einer Vielzahl von Endgerätevorrichtungen, umfassend die zweite Endgerätevorrichtung, umfassen; und
Bestimmen (S403) von HARQ-Informationen entsprechend der zweiten Endgerätevorrichtung durch die zweite Endgerätevorrichtung oder den Chip basierend auf den Rückkopplungsinformationen,
wobei die zweite Endgerätevorrichtung eine Vielzahl von HARQ-Prozessen aufweist, und die HARQ-Informationen der zweiten Endgerätevorrichtung Rückkopplungsinformationen entsprechend der Vielzahl von HARQ-Prozessen umfassen,
wobei das Verfahren ferner Folgendes umfasst:
Empfangen einer Kennung der ersten Endgerätevorrichtung durch die zweite Endgerätevorrichtung oder den Chip;
wobei die Kanalressource ein Rückkopplungskanal entsprechend der ersten Endgerätevorrichtung ist, und
wobei der Rückkopplungskanal basierend auf der Kennung der ersten Endgerätevorrichtung bestimmt wird.

6. Verfahren nach Anspruch 5, wobei sich die erste Endgerätevorrichtung und die Vielzahl von zweiten Endgerätevorrichtungen in derselben Endgerätevorrichtungsgruppe befinden, und die Kennung der ersten Endgerätevorrichtung eine oder mehrere der folgenden Kennungen umfasst: eine Kennung der Endgerätevorrichtungsgruppe, eine Kennung der ersten Endgerätevorrichtung in der Endgerätevorrichtungsgruppe oder eine Quellen-ID der Quellknotenkennung der ersten Endgerätevorrichtung.

7. Verfahren nach Anspruch 5, wobei die Kennung der ersten Endgerätevorrichtung eine Quellen-ID der ersten Endgerätevorrichtung umfasst.

8. Verfahren nach einem der Ansprüche 5 bis 7, wobei das Verfahren nach dem Erkennen von Rückkopplungsinformationen, die durch eine erste Endgerätevorrichtung gesendet werden, durch eine zweite Endgerätevorrichtung oder einen Chip für eine zweite Endgerätevorrichtung auf einer Kanalressource ferner Folgendes umfasst:
Bestimmen von Anzeigeinformationen durch die zweite Endgerätevorrichtung oder den Chip, wobei die Anzeigeinformationen anzeigen, ob die mindestens erste Endgerätevorrichtung die HARQ-Informationen erneut senden muss; und
Senden der Anzeigeinformationen durch die zweite Endgerätevorrichtung oder den Chip.

9. Hybrides automatisches Wiederholungsanforderungsrückkopplungsgerät, HARQ-Rückkopplungsgerät, wobei das Gerät dazu konfiguriert ist, das Verfahren nach einem der Ansprüche 1 bis 4 zu implementieren; oder das Verfahren nach einem der Ansprüche 5 bis 8 zu implementieren.

10. Computerlesbares Speichermedium, das ein Programm oder Anweisungen speichert, welche, wenn sie durch einen oder mehrere Prozessoren gelesen und ausgeführt werden, bewirken, dass der eine oder die mehreren Prozessoren das Verfahren nach einem der Ansprüche 1 bis 8 durchführen.

11. Computerprogrammprodukt, welches, wenn es auf einer elektronischen Vorrichtung läuft oder durch diese ausgeführt wird, bewirkt, dass die elektronische Vorrichtung das Verfahren nach einem der Ansprüche 1 bis 8 durchführt.

## Revendications

1. Procédé de renvoi de demande de répétition automatique hybride (HARQ), dans lequel le procédé comprend :
la réalisation (S401), par un premier dispositif terminal ou une puce pour un premier dispositif terminal, de l'écoute avant de parler, LBT ; et
une fois la LBT réussie, l'envoi (S402), par le premier dispositif terminal ou la puce, des informations HARQ d'une pluralité de seconds dispositifs terminaux sur une ressource de canal sur laquelle la LBT réussit,
dans lequel un quelconque second dispositif terminal a une pluralité de processus HARQ, et les informations HARQ du second dispositif terminal comprennent des informations de renvoi correspondant à la pluralité de processus HARQ,
dans lequel le procédé comprend en outre :
l'envoi, par le premier dispositif terminal ou la puce, d'un identifiant du premier dispositif terminal à la pluralité de seconds dispositifs terminaux ;
dans lequel l'envoi (S402), par le premier dispositif terminal ou la puce, des informations HARQ d'une pluralité de seconds dispositifs terminaux sur une ressource de canal sur laquelle la LBT réussit comprend :
l'envoi, par le premier dispositif terminal ou la puce, des informations HARQ de la pluralité de seconds dispositifs terminaux sur un canal de renvoi sur lequel la LBT réussit, dans lequel une correspondance existe entre le canal de renvoi et le premier dispositif terminal, et
dans lequel le canal de renvoi est déterminé sur la base de l'identifiant du premier dispositif terminal.

2. Procédé selon la revendication 1, dans lequel le premier dispositif terminal et la pluralité de seconds dispositifs terminaux sont situés dans un même groupe de dispositifs terminaux, et l'identifiant du premier dispositif terminal comprend l'un ou plusieurs des identifiants suivants : un identifiant du groupe de dispositifs terminaux, un identifiant du premier dispositif terminal dans le groupe de dispositifs terminaux, ou un identifiant de nœud source (source ID) du premier dispositif terminal.

3. Procédé selon la revendication 1, dans lequel l'identifiant du premier dispositif terminal comprend un identifiant source du premier dispositif terminal.

4. Procédé selon l'une quelconque des revendications 1 à 3, dans lequel après l'envoi, par le premier dispositif terminal ou la puce, des informations HARQ d'une pluralité de seconds dispositifs terminaux sur une ressource de canal sur laquelle la LBT réussit, le procédé comprend en outre :
la réception, par le premier dispositif terminal ou la puce, des informations d'indication envoyées par le second dispositif terminal, dans lequel les informations d'indication indiquent si au moins un dispositif terminal comprenant le premier dispositif terminal doit renvoyer des informations HARQ ; et
le renvoi, par le premier dispositif terminal ou la puce, des informations HARQ au second dispositif terminal lorsque les informations d'indication indiquent au premier dispositif terminal de renvoyer des informations HARQ.

5. Procédé de renvoi de demande de répétition automatique hybride (HARQ), dans lequel le procédé comprend :
la détection, par un second dispositif terminal ou une puce pour un second dispositif terminal, sur une ressource de canal, des informations de renvoi envoyées par un premier dispositif terminal après avoir réalisé avec succès l'écoute avant de parler (LBT) sur la ressource de canal, dans lequel les informations de renvoi comprennent les informations HARQ d'une pluralité de dispositifs terminaux comprenant le second dispositif terminal ; et
la détermination (S403), par le second dispositif terminal ou la puce, sur la base des informations de renvoi, des informations HARQ correspondant au second dispositif terminal,
dans lequel le second dispositif terminal a une pluralité de processus HARQ, et les informations HARQ du second dispositif terminal comprennent des informations de renvoi correspondant à la pluralité de processus HARQ,
dans lequel le procédé comprend en outre :
la réception, par le second dispositif terminal ou la puce, d'un identifiant du premier dispositif terminal ;
dans lequel la ressource de canal est un canal de renvoi correspondant au premier dispositif terminal, et
dans lequel le canal de renvoi est déterminé sur la base de l'identifiant du premier dispositif terminal.

6. Procédé selon la revendication 5, dans lequel le premier dispositif terminal et la pluralité de seconds dispositifs terminaux sont situés dans un même groupe de dispositifs terminaux, et l'identifiant du premier dispositif terminal comprend l'un ou plusieurs des identifiants suivants : un identifiant du groupe de dispositifs terminaux, un identifiant du premier dispositif terminal dans le groupe de dispositifs terminaux, ou un identifiant de nœud source (source ID) du premier dispositif terminal.

7. Procédé selon la revendication 5, dans lequel l'identifiant du premier dispositif terminal comprend un identifiant source du premier dispositif terminal.

8. Procédé selon l'une quelconque des revendications 5 à 7, dans lequel, après la détection, par un second dispositif terminal ou une puce pour un second dispositif terminal, sur une ressource de canal, des informations de renvoi envoyées par un premier dispositif terminal, le procédé comprend en outre :
la détermination, par le second dispositif terminal ou la puce, des informations d'indication, dans lequel les informations d'indication indiquent si l'au moins un premier dispositif terminal doit renvoyer des informations HARQ ; et
l'envoi, par le second dispositif terminal ou la puce, des informations d'indication.

9. Appareil de renvoi HARQ à demande de répétition automatique hybride, dans lequel l'appareil est configuré pour mettre en œuvre le procédé selon l'une quelconque des revendications 1 à 4 ; ou pour mettre en œuvre le procédé selon l'une quelconque des revendications 5 à 8.

10. Support de stockage lisible par ordinateur stockant un programme ou des instructions qui, lorsqu'ils sont lus et exécutés par un ou plusieurs processeurs, amènent les un ou plusieurs processeurs à réaliser le procédé selon l'une quelconque des revendications 1 à 8.

11. Produit de programme informatique qui, lorsqu'il est exécuté par un dispositif électronique, amène le dispositif électronique à réaliser le procédé selon l'une quelconque des revendications 1 à 8.
